# EUROPEAN PATENT APPLICATION

(11) **EP 4 170 573 A1**
(43) Date of publication of application: **26.04.2023**
(21) Application number: 21826262.4
(22) Date of filing: 10.06.2021
(51) Int. Cl.: G06Q 30/02, G06N 20/00, G06K 9/00

(54) **ADVERTISING SYSTEM AND METHOD BASED ON DIGITAL INTELLIGENT INFORMATION SHARING USING EXTERNAL DISPLAY OF VEHICLE**

(30) Priority: 17.06.2020 KR 20200073406
(71) Applicant: Koo, Hyo Jeong, Seoul 06006 (KR)
(72) Inventor: Koo, Hyo Jeong, Seoul 06006 (KR)
(74) Representative: Murgitroyd & Company
(86) International application number: PCT/KR2021/007244
(87) International publication number: WO 2021/256775

(57) **Abstract**

The present disclosure has been conceived to solve the above-described problems, and provides an advertisement system and method capable of providing a high advertisement delivery effect by delivering customized advertisement contents to consumers through an external display of a vehicle based on digital intelligence information sharing, and contributing to the activation of the advertisement market using the outside of a vehicle.

## Description

### BACKGROUND

### Technical Field

The present disclosure relates to an advertisement system and method using an external display of a vehicle, and specifically, to an advertisement system and method capable of providing a high advertisement delivery effect by delivering customized advertisement content to consumers through external displays of vehicles based on digital intelligence information sharing.

### Background Art

Advertisements attached to the outside of moving vehicles, such as buses, subways, taxis, trucks, and the like, have a higher frequency of advertisement exposure to many and unspecified persons as compared to an outdoor billboard at a fixed location. Accordingly, vehicles have been conventionally utilized as a moving advertisement medium. Conventional advertising using a vehicle has been performed in the form of attaching an advertisement to the outside of the vehicle or wrapping an advertisement on the vehicle, as well as attaching an advertisement to the inside of the vehicle.

However, such advertisements using the outside of the vehicle are limited to displaying fixed advertisements on the outside of the vehicle, so there is a limit to providing customized advertisement contents in response to rapidly changing consumer needs and attracting the attention of pedestrians watching advertisement content from outside the vehicle. In addition, a lot of manpower and resources are required to install advertisements with decals or paints on the outside of the vehicle and remove them, so there is a limit to the development of the advertisement market using the outside of the vehicle.

Accordingly, there is a demand for the development of an advertisement system and method capable of providing a high advertisement delivery effect by easily displaying customized advertisement contents on the outside of the vehicle based on digital intelligence information sharing.

### SUMMARY

The present disclosure has been conceived to solve the above problems, and provides an advertisement system and method capable of providing a high advertisement delivery effect by delivering customized advertisement contents to consumers through an external display of a vehicle based on digital intelligence information sharing, and contributing to the activation of the advertisement market using the outside of a vehicle.

An advertisement providing device according to an embodiment of the present disclosure is an advertisement providing device that collects data from at least one advertisement display vehicle and an external server, and determines advertisement content to be provided to the advertisement display vehicle by analyzing the collected data. The advertisement providing device comprises: a transceiver configured to transmit and receive data to and from the advertisement display vehicle and the external server through a network; a memory including a plurality of pre-produced advertisement contents or a plurality of templates for production of advertisement contents; and a control unit configured to determine advertisement content to be provided to the advertisement display vehicle based on location information and detection information received from the advertisement display vehicle, and information collected from the external server.

An advertisement system using an external display of a vehicle according to an embodiment of the present disclosure comprises: at least one advertisement display vehicle; an advertisement providing device that collects data from the advertisement display vehicle and an external server, and determines advertisement content to be provided to the advertisement display vehicle by analyzing the collected data; and a user terminal for controlling at least one of the advertisement providing device and the advertisement displaying vehicle, wherein the advertisement providing device includes: a transceiver configured to transmit and receive data to and from the advertisement display vehicle and the external server through a network; a memory including a plurality of pre-produced advertisement contents or a plurality of templates for production of advertisement contents; and a control unit configured to determine advertisement content to be provided to the advertisement display vehicle based on location information and detection information received from the advertisement display vehicle, and information collected from the external server, and wherein the advertisement display vehicle includes: a display device positioned at an outside of the vehicle to display advertisement content provided by the advertisement providing device; a position sensor that generates location information by calculating a current position of the advertisement display vehicle; a detection sensor that detects a surrounding environment of the advertisement display vehicle and generates detection information; and a display controller configured to control operations of the display device, the position sensor, and the detection sensor.

An advertisement method using an external display of a vehicle according to an embodiment of the present disclosure comprises: receiving location information and detection information from at least one advertisement display vehicle through an advertisement providing device; determining local information on a district in which the advertisement display vehicle is located by analyzing the location information, and determining object information around the advertisement display vehicle by analyzing the detection information, through the advertisement providing device; setting at least one of the local information and the object information as a main keyword, and collecting information related to the keyword from an external server, through the advertisement providing device; determining advertisement content based on the collected information through the advertisement providing device; and providing the determined advertisement content to the advertisement display vehicle through the advertisement providing device.

A computer program according to an embodiment of the present disclosure is stored in a medium to execute the advertisement method using an external display of a vehicle in combination with hardware.

### ADVANTAGEOUS EFFECTS

The advertisement system and method based on digital intelligence information sharing using an external display of a vehicle according to the embodiment of the present disclosure can determine and provide advertisement content suitable for an advertisement display vehicle by analyzing data collected from the advertisement display vehicle and the external server through an artificial intelligence algorithm. That is, it is possible to provide consumers with customized advertisement content that is suitable for the environment around the advertisement display vehicle and that corresponds to the needs of consumers, and the advertisement delivery effect using the outside of the vehicle can be further increased.

The advertisement system and method using an external display of a vehicle according to the present embodiment can make it easier and safer to control and manage the advertisement display vehicle and/or advertisement providing device through the user terminal. In addition, the advertisement system and method using an external display of a vehicle according to the present embodiment detects the state of the vehicle in real time or near real time, and transmits an abnormal state occurrence situation through various means, so that the abnormal state of the vehicle can be quickly solved. That is, the advertisement system using an external display of a vehicle can be provided under a safer and easier environment.

The advertisement system and method using an external display of a vehicle according to the present embodiment detects an operating state of the vehicle, and selectively provides advertisement content according to the operating state of the vehicle, thereby further increasing the consumer's interest and concentration.

### BRIEF DESCRIPTION OF THE DRAWINGS

FIG. 1 is an exemplary view for explaining an advertisement system using an external display of a vehicle according to an embodiment of the present disclosure.
FIG. 2 is a block diagram illustrating the configuration of an advertisement display vehicle.
FIG. 3 is a block diagram illustrating the configuration of an advertisement providing device.
FIGS. 4 to 8 show an exemplary operating environment of an application installed in a user terminal.
FIG. 9 is a flowchart illustrating an advertisement method using an external display of a vehicle according to another embodiment of the present disclosure.

### DESCRIPTION OF EXEMPLARY EMBODIMENTS

Hereinafter, embodiments of the present disclosure will be described in detail with reference to the accompanying drawings so that those of ordinary skill in the art can easily implement them. However, the present disclosure may be embodied in several different forms and is not limited to the embodiments described herein. Throughout the specification, when a part "comprises or includes" a certain component, it means that other components may be further included, rather than excluding other components, unless otherwise stated.

The terms used in this specification have been selected as currently widely used general terms as possible while considering their functions, but may vary depending on the intention of a person skilled in the art, custom, the emergence of new technology, or the like. In addition, in a specific case, there are terms arbitrarily selected by the applicant, and in this case, the meaning thereof will be described in the corresponding description of the specification. Therefore, the terms used in this specification should be interpreted based on the actual meaning of the terms and the contents of the entire specification, rather than the simple names of the terms.

As used herein, terms such as "unit," "module," "device," "terminal," "server," or "system," are intended to refer to a combination of hardware and software driven by the hardware. For example, the hardware may be a data processing device including a CPU or other data processors, such as a mobile, and a PC. In addition, the software driven by the hardware may refer to a running process, an object, an executable file, a thread of execution, a program, and the like.

Hereinafter, an advertisement system using an external display of a vehicle will be described with reference to the accompanying drawings.

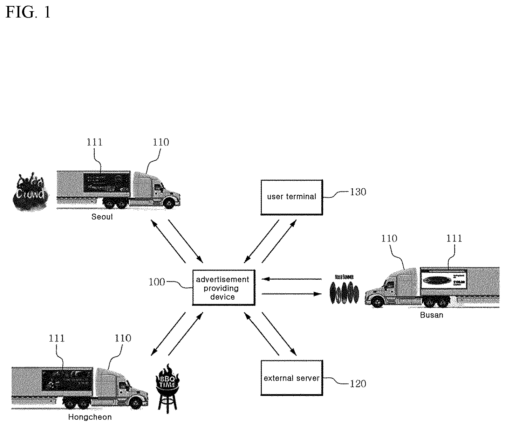

FIG. 1 is an exemplary view for explaining an advertisement system using an external display of a vehicle according to an embodiment of the present disclosure.

Referring to FIG. 1, an advertisement system 10 using an external display of a vehicle includes an advertisement providing device 100, at least one advertisement display vehicle 110, and at least one external server 120.

The advertisement providing device 100 is configured to communicate with the advertisement display vehicle 110 and the external server 120 through a network. Here, the network provides a connection path through which the advertisement providing device 100, the advertisement display vehicle 110, and the external server 120 can connect to each other, and transmit and receive data. The network may include, for example, wired networks such as LANs (Local Area Networks), WANs (Wide Area Networks), MANs (Metropolitan Area Networks), and ISDNs (Integrated Service Digital Networks), or wireless networks such as wireless LANs, CDMA, Bluetooth, and satellite communication. However, the scope of the present disclosure is not limited to the above.

The advertisement providing device 100 collects data from the advertisement display vehicle 110 and the external server 120, and analyzes the collected data to determine advertisement content suitable for the advertisement display vehicle 110. The advertisement providing device 100 may collect information related to the advertisement display vehicle 110 from the advertisement display vehicle 110. For example, the data may include location information of the advertisement display vehicle 110, information on a driving area of the advertisement display vehicle 110, and surrounding information of the advertisement display vehicle 110. Further, the advertisement providing device 100 may collect big data that is a basis for advertisement decision from the external server 120. In this case, the external server 120 may be a web server such as Naver, Daum, Google, etc. that can collect big data such as consumer interests and shopping-related information, but is not limited thereto, and may be a meteorological agency server capable of collecting big data such as climate information and weather information for each district.

The advertisement providing device 100 may analyze data collected from the advertisement display vehicle 110 and the external server 120 through an artificial intelligence algorithm to determine advertisement content suitable for the advertisement display vehicle 110. The advertisement providing device 100 may provide the determined advertisement content to the advertisement display vehicle 110 through a network.

The advertisement display vehicle 110 is a moving vehicle such as a bus, subway, taxi, or truck, and a display device 111 for displaying information content may be attached to the outside of the advertisement display vehicle 110. The display device 111 may be a thin-film display device capable of being easily coupled to the outside of the vehicle. The display device 111 may be a flexible display device, and may be easily attached to a portion on the outside of the vehicle other than a glass window to provide information content to consumers around the vehicle. For example, the advertisement display vehicle 110 may be a cargo truck, and the display device 111 may be attached to an outer wall of a space in which cargo is loaded. However, the present disclosure is not limited to the above, and the display device 111 may be configured as a transparent display device. That is, the display device 111 may provide a function as a vehicle window that transmits light between the inside and the outside of the vehicle, and may also provide a function as a content providing device when display of advertisement contents is required.

The information content provided through the display device 111 may be advertisement content, but is not limited thereto. The information content of the display device 111 may include information related to the advertisement display vehicle 110. For example, information indicating a group to which the advertisement display vehicle 110 belongs or information that the advertisement display vehicle 110 needs to transmit to the general public (such as a bus number indicating route information) may be provided through the display device 111. The above information is conventionally fixed information provided through a decal or painting, and in order to change the information, the decal or painting needs to be changed, which results in a lot of time and cost. Contrarily, the information content provided by the display device 111 may be flexibly changed unlike decals or paints that have been conventionally provided to the outside of the vehicle. That is, since the advertisement display vehicle 110 of the present disclosure can display flexible information content through the display device 111, the advertisement display vehicle 110 can be used flexibly. In other words, various groups can share one advertisement display vehicle 110, and one advertisement display vehicle 110 can be selectively used for a plurality of bus routes, so that the utility of the advertisement display vehicle 110 can be further improved.

In addition, the advertisement providing device 100 according to the present embodiment can provide advertisement content optimized in response to the location and environment in which the advertisement display vehicle 110 is located. When a plurality of advertisement display vehicles 110 are located in different places, advertisements output by the advertisement display vehicles 110 may also be different. As shown in FIG. 1, when the advertisement display vehicle 110 is located in Seoul and a performance of a famous singer is currently scheduled in Seoul, the advertisement providing device 100 may collect the location information of the advertisement display vehicle 110 from the advertisement display vehicle 110 and the performance information of the famous singer from the external server 120, and provide advertisement content related to the performance of the famous singer to the advertisement display vehicle 110 located in Seoul. Further, when the advertisement display vehicle 110 is located in Busan including beaches, the advertisement providing device 100 may provide advertisement content related to beach goods to the advertisement display vehicle 110 located in Busan. Furthermore, when the advertisement display vehicle 110 is located in Hongcheon where a barbecue festival is being held, the advertisement providing device 100 may provide advertisement content related to the barbecue festival to the advertisement display vehicle 110 located in Hongcheon. Each advertisement display vehicle 110 provides the received advertisement content through the display device 111 to deliver customized information necessary for consumers in the corresponding district. That is, the advertisement display vehicle 110 and the advertisement providing device 100 can provide customized advertisement content based on digital intelligent information sharing.

Hereinafter, the configurations and operations of the advertisement providing device 100 and the advertisement display vehicle 110 will be described in more detail.

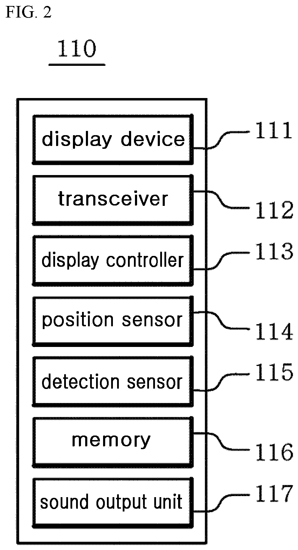

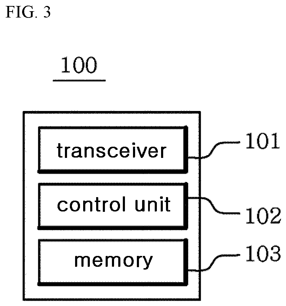

FIG. 2 is a block diagram illustrating the configuration of the advertisement display vehicle 110. FIG. 3 is a block diagram illustrating the configuration of the advertisement providing device 100.

Referring to FIG. 2, the advertisement display vehicle 110 includes the display device 111, a transceiver 112, a display controller 113, a position sensor 114, a detection sensor 115, a memory 116, and a sound output unit 117. That is, the advertisement display vehicle 110 may be configured to further include the above-described components in addition to a vehicle for driving.

The display device 111 may be configured to be attached to the outside of the advertisement display vehicle 110 to display advertisement content. Here, the advertisement content may include image data, video data, text data, and/or audio data, and at least image data, video data, and text data may be output through the display device 111.

The sound output unit 117 may be configured to be attached to the outside of the advertisement display vehicle 110 to output audio related to advertisement content. That is, the audio data of the advertisement content is output through the sound output unit 117.

The transceiver 112 is configured to transmit and receive data to and from the advertisement providing device 100 through a network. The advertisement display vehicle 110 may transmit location information and detection information to the advertisement providing device 100 through the transceiver 112, and may receive advertisement content from the advertisement providing device 100. In addition, the transceiver 112 may transmit and receive data to and from the external server 120 through the network, and may search and collect data required for data processing by the display controller 113 from the external server 120.

The position sensor 114 is configured to receive a signal from a GPS satellite and calculate a current position of the advertisement display vehicle 110. The position sensor 114 may generate location information by calculating the current position of the advertisement display vehicle 110 in real time or near real time. The generated location information may be transmitted to the advertisement providing device 100 through the transceiver 112.

The detection sensor 115 is configured to detect the surrounding environment of the advertisement display vehicle 110. The detection sensor 115 may include a camera capable of photographing the surrounding environment of the advertisement display vehicle 110, and may generate video data obtained by an image sensor of the camera. In addition, the detection sensor 115 may include a microphone capable of acquiring the sound of the surrounding environment of the advertisement display vehicle 110, and may generate voice data acquired through the microphone. That is, the detection sensor 115 may generate detection data including video data sensing the surrounding environment of the advertisement display vehicle 110 and audio data obtained from the surrounding environment in real time or near real time. The generated detection information may be transmitted to the advertisement providing device 100 through the transceiver 112.

The display controller 113 is configured to control the overall operation of the advertisement display vehicle 110 and perform data processing necessary for the operation of the above-described components. The display controller 113 may control the overall process of generating location information and detection information, transmitting the generated data, and displaying the received advertisement content through the display device 111.

The memory 116 may store a program for processing and control of the display controller 113, and may provide a function for temporary storage or storage of input or output data (location information, detection information, or advertisement content). The memory 116 may include at least one type of storage medium among a flash memory type, a hard disk type, a multimedia card micro type, a card type memory (e.g., SD or XD memory), RAM, and ROM.

The advertisement providing device 100 includes a transceiver 101, a control unit 102, and a memory 103.

The transceiver 101 is configured to transmit and receive data to and from the advertisement display vehicle 110 and the external server 120 through the network. The advertisement providing device 101 may collect location information and detection information from the advertisement display vehicle 110 through the transceiver 101, and may search data in the external server 120 and collect the searched data through the transceiver 101.

The control unit 102 may control the overall operation of the advertisement providing device 100. The control unit 102 may collect data and analyze the collected data to determine an advertisement suitable for the advertisement providing device 100.

The memory 103 may store a program for processing and control of the control unit 102, or may be a database in which input or output data are stored. The memory 103 may include at least one type of storage medium among a flash memory type, a hard disk type, a multimedia card micro type, a card type memory (e.g., SD or XD memory), RAM, and ROM. Further, the memory 103 may include a plurality of pre-produced advertisement contents and a plurality of templates for producing advertisement content. The plurality of templates may include a plurality of template videos, a plurality of template images, a plurality of template sounds, and the like.

The control unit 102 may determine advertisement content suitable for the advertisement display vehicle 110, from the memory 103, based on the location information and the detection information received from the advertisement display vehicle 110, and the information collected from the external server 120. Specifically, the control unit 102 may determine local information of the district where the advertisement display vehicle 110 is located by analyzing the location information. In this case, the local information may be determined in administrative district unit. That is, the local information may be determined for City or Province unit or in detailed administrative district unit such as Eup, Myeon, and Dong.

In addition, the control unit 102 may determine object information around the advertisement display vehicle 110 by analyzing the detection information. In this case, the object information may include information related to a building located in the vicinity of the advertisement display vehicle 110, for example, a mart, a shopping mall, a movie theater, a department store, a performance hall, and the like, and the control unit 102 may include a deep learning-based first image analysis model for determining the type of a building existing in the video data.

In addition, the object information may be information related to a person located in the vicinity of the advertisement display vehicle 110. That is, the control unit 102 may further include a deep learning-based second image analysis model for analyzing a person included in the video data of the detection information. The second image analysis model may determine at least whether a person exists in the video data and the number of persons. Further, the second image analysis model may analyze the age of the person in the video data and determine the gender of the person. Moreover, the second image analysis model may determine the contact or not-contact state of the persons, and may estimate the relationship between a plurality of persons in consideration of the ages, genders, and contact or non-contact state of the persons. For example, when a couple of male and female in similar age group hold hands in the video data, the second image analysis model may estimate the relationship between these persons as a couple relationship.

The control unit 102 may generate object information including information about buildings and people located in the vicinity of the advertisement display vehicle 110 through the above-described first and second image analysis models.

The control unit 102 may collect, using at least one of the generated local information and object information of the advertisement display vehicle as a main keyword, information related to the keyword from the external server 120. In this case, the collected information may be at least one of text information, image information, and video information related to the keyword. The control unit 102 may set a district as a keyword, search for the keyword in the external server 120, and scrape the search result. For example, text, image, or video information about local weather, local issues, local events, local events, and products related to the district may be collected.

Further, the control unit 102 may set at least one of the object information as a keyword, search for the keyword in the external server 120, and scrape the search result. For example, the control unit 102 may collect information related to events, promotions, and discount information related to a mart (object) located around the advertisement display vehicle 110 or events, screening times, related to a movie theater (object) located around the advertisement display vehicle 110, etc. In addition, when the people around the vehicle are estimated to be a couple of male and female in their twenties, the control unit 102 may set the male and female couple in their twenties as a keyword and collect events, travel, shopping, movie information, etc. related to the male and female couple in their twenties from the external server 120.

The control unit 102 may determine advertisement content continuity based on information collected from the external server 120. When collecting information indicating that the ultraviolet rays around the advertisement display vehicle 110 are strong from the external server 120, the control unit 102 may determine advertisement content continuity, so that the advertisement display vehicle 110 outputs advertisement contents promoting a UV blocking product. In addition, when collecting the information that there is a local event in the district where the advertisement display vehicle 110 is located from the external server 120, the control unit 102 may determine advertisement content continuity, so that the advertisement display vehicle 110 outputs advertisement contents promoting the local event. Further, when the advertisement display vehicle 110 is located in the vicinity of a mart and discount information of the mart is collected from the external server 120, the control unit 102 may determine advertisement content continuity, so that the advertisement display vehicle 110 outputs advertisement contents that delivers the discount information of the mart. Furthermore, when a couple of male and female in their twenties is located around the advertisement display vehicle 110 and information related to a product preferred by a male and female couple in their twenties is collected from the external server 120, the control unit 102 may determine advertisement content continuity, so that the advertisement display vehicle 110 outputs advertisement contents promoting the product.

In this case, the advertisement content continuity refers to a design diagram constituting a basic skeleton of a scene composition when producing advertisement contents, and may mean basic matters required for advertisement content production. The control unit 102 may search the memory 103 for advertisement content corresponding to the determined advertisement content continuity. When the advertisement content corresponding to the determined advertisement content continuity is stored in the memory 103, the control unit 102 may determine to read the advertisement content and transmit it to the advertisement display vehicle 110. When no advertisement content corresponding to the determined advertisement content continuity is stored in the memory 103, the control unit 102 may create and generate advertisement content corresponding to the determined advertisement content continuity.

The memory 103 may include a plurality of template videos, a plurality of template images, and a plurality of template sounds, and the control unit 102 reads a template video, a template image, and a template sound corresponding to the advertisement content continuity from the memory 103. In this case, the template video may be a pre-made video for production of an advertisement content video, and may be configured such that an advertisement video or image can be inserted into the template video. For example, the template video may include a start video, a promotion video, and an end video, and advertisement product video may be partially inserted into the promotion video, and information of the advertisement product may be inserted into the start video and the end video. The template image may be a pre-made image for production of an advertisement content image, and may be configured such that an advertisement image can be inserted into the template image. The template sound may be a pre-made sound for effectively delivering advertisement contents together with the template video and the template image.

The control unit 102 may generate advertisement content by using the information collected from the external server 120 and a template corresponding to the determined advertisement content continuity. The control unit 102 may generate advertisement content corresponding to the advertisement content continuity by using at least one of the collected information, the template video, the template image, and the template sound. For example, the control unit 102 may generate advertisement contents that delivers a local weather in which the advertisement display vehicle 110 is located by combining the video, the template video, and the template sound related to the local weather collected from the external server 120. In addition, the control unit 102 may generate advertisement contents that delivers event information of a mart (object) located in the vicinity of the advertisement display vehicle 110 by combining the image including the event information of the mart (object) collected from the external server 120, the template image, and the template sound. The control unit 102 may store the newly produced and generated advertisement contents in the memory 103 and transmit the same to the advertisement display vehicle 110.

As described above, the advertisement providing device 100 can determine advertisement contents suitable for the advertisement display vehicle 110 to provide the advertisement contents to the advertisement display vehicle 110 by analyzing the data collected from the advertisement display vehicle 110 and the external server 120 through the artificial intelligence algorithm. Accordingly, the advertisement display vehicle 110 can provide consumers with customized advertisement contents suitable for the surrounding environment and corresponding to the needs of the consumers, which further increases the advertisement delivery effect using the outside of the vehicle.

The advertisement system 10 using the external display of the vehicle according to the present embodiment may further include a user terminal 130 for controlling the advertisement display vehicle 110 and/or the advertisement providing device 100, and controlling data transmission and reception between the advertisement display vehicle 110 and/or the advertisement providing device 100. The advertisement providing device 100 may provide an application (App) environment and a web environment in which a service for controlling the advertisement displaying vehicle 110 and/or the advertisement providing device 100 and controlling data transmission/reception between the advertisement displaying vehicle 110 and the advertisement providing device 100 is implemented. Such an application may be installed in the user terminal 130, or the user terminal 130 may be able to access the web environment in which the service is implemented. The user may check advertisement contents to be displayed on the advertisement display vehicle 110 through the user terminal 130, and may determine an output order of the advertisement contents.

The user terminal 130 may be configured to transmit and receive data to and from at least one of the advertisement display vehicle 110 and the advertisement providing device 100 through a network. In addition, the user terminal 130 may further include an output unit for outputting a service screen to the user (e.g., a display device, a speaker), an input unit for receiving a user's input to control the service (e.g., a touch panel), and the like. The user terminal 130 may be a smartphone, but is not limited thereto.

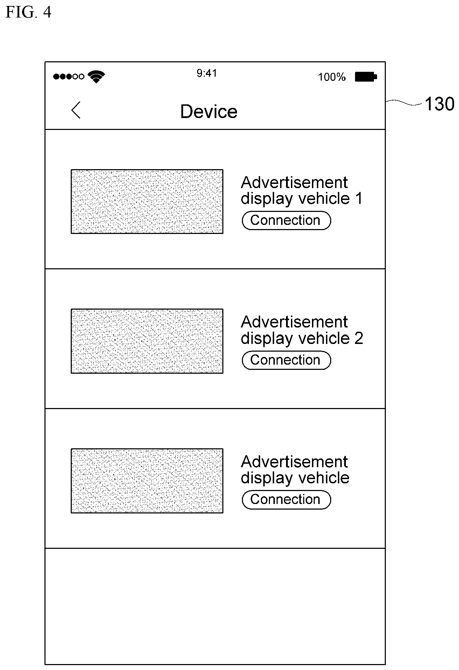

FIGS. 4 to 8 show an exemplary operating environment of an application installed in the user terminal. The user may be an entity that obtains an authority to execute the application installed in the user terminal 130 and control the advertisement display vehicle 110 and/or the advertisement providing device 100, and may be an advertiser, an advertisement agency on behalf of the advertiser, or a driver of the advertisement display vehicle.

FIG. 4 is a screen for selecting an advertisement display vehicle 110 to be controlled. As shown in FIG. 4, the user may confirm a list (advertisement display vehicles 1 to 3) of the advertisement display vehicle 110 currently connected to the advertisement providing device 100, and select the advertisement display vehicle 110 to be controlled.

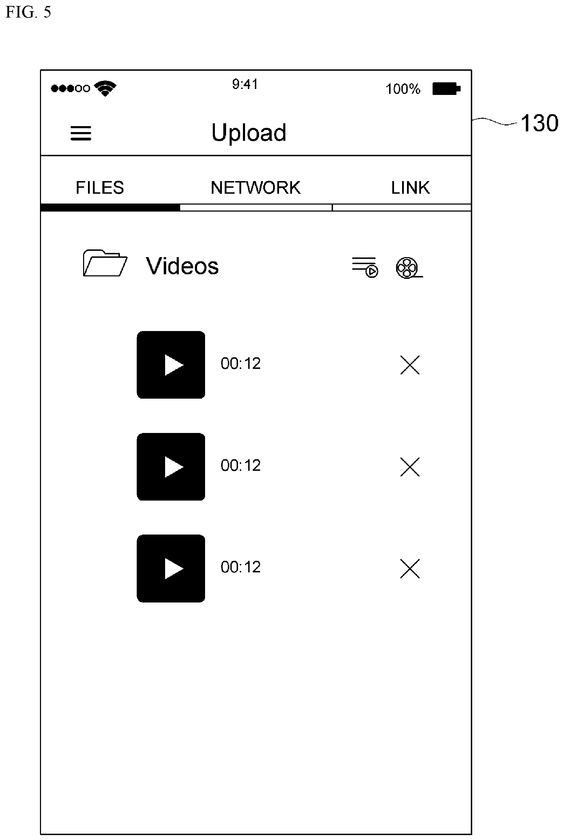

FIG. 5 is a screen showing a list of advertisement contents to be provided to the selected advertisement display vehicle 110. The advertisement content list shown in FIG. 5 may be advertisement contents generated by the control unit 102. The advertisement contents generated by the control unit 102 may be automatically transmitted to the advertisement display vehicle 110, but may also be transmitted after the user's final confirmation through the user terminal 130. The user can check the advertisement contents by executing the advertisements shown in FIG. 5, and finally determine the advertisement content to be output through the advertisement display vehicle 110.

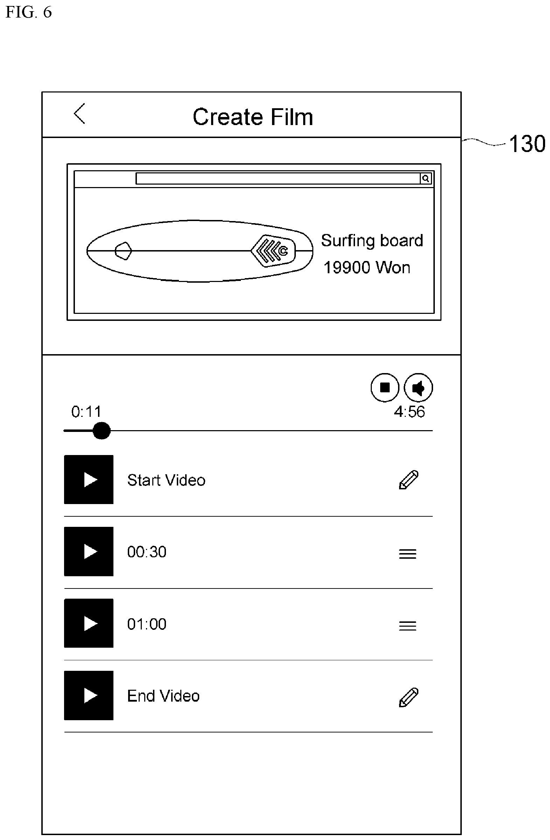

In addition, the user may modify the advertisement content generated by the control unit 102 through the user terminal 130 or create a new advertisement content. FIG. 6 shows an exemplary screen for generating such an advertisement.

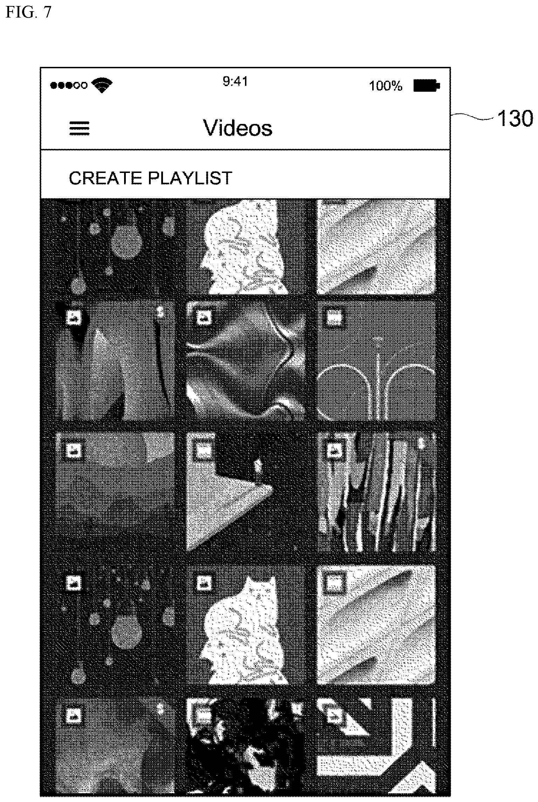

Further, the user may create an advertisement playlist output through the advertisement display vehicle 110 using the user terminal 130, and set the playback order and playback method of advertisements included in the advertisement playlist. FIG. 7 shows an exemplary screen for generating such an advertisement playlist.

In the advertisement display vehicle 110 included in the advertisement system 10 using the external display of the vehicle according to the present embodiment, since the display device 111 is located at the outside of the advertisement display vehicle 110, maintenance and repair of the display device 111 is more important. The detection sensor 115 of the advertisement display vehicle 110 may further detect the state of the display device 111 to generate detection data in real time or near real time. That is, the detection sensor 115 may further detect whether the display device 111 operates in a safe and normal state, and, for example, may detect a state of the display device 111 such as brightness, residual battery capacity, temperature, water leakage, or normal/abnormal operation of the display device 111. The detection information related to the state of the display device 111 may also be provided to the advertisement providing device 100.

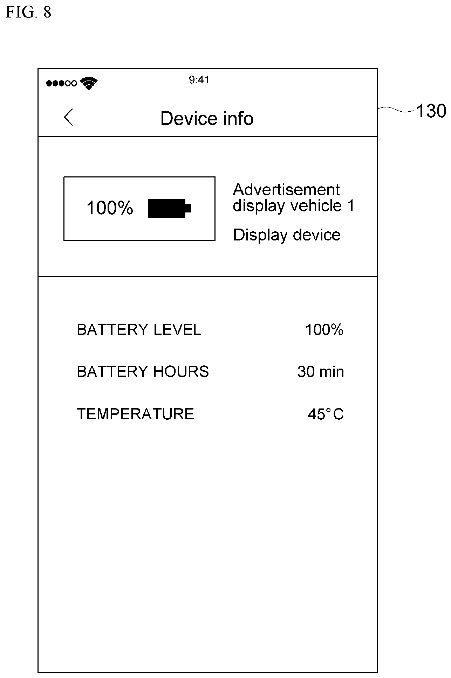

The control unit 102 of the advertisement providing device 100 may process the detection information and manage the state of the display device 111 in real time or near real time. In addition, the state of the display device 111 may be provided to the user terminal 130 in real time or near real time. The user may check the state of the display device 111 through the application or the web environment. FIG. 8 shows a screen for checking the state of the display device 111. As shown in FIG. 8, data related to the state of the display device 111 processed by the control unit 102 may be provided through the user terminal 130, and the user may check the state of the display device 111. In addition, when the state of the display device 111 is out of a set range, the control unit 102 automatically performs an appropriate action for the display device 111 or provides a notification about an abnormal state of the display device 111 to the user through the user terminal 130. For example, when the temperature of the display device 111 exceeds a preset temperature, the control unit 102 provides a command to stop the operation of the display device 111 to the advertisement display vehicle 110, or may display a notification that the operation of the display device 111 needs to be stopped due to the high temperature state thereof on the user terminal 130.

As described above, in the advertisement system 10 using the external display of the vehicle according to the present embodiment, the control and management of the advertisement display vehicle 110 and/or the advertisement providing device 100 through the user terminal 130 becomes easier and safer. That is, the advertisement system using the external display of the vehicle can be provided under a safer and easier environment.

In addition, the advertisement display vehicle 110 of the advertisement system 10 using the external display of the vehicle according to the present embodiment can detect an operation state of the vehicle and selectively provide advertisement contents according to the operation state.

It may be illegal under the laws of some countries to reproduce a video while the vehicle 110 is driving, and in a driving state, it may be more effective for consumers who observe the driving vehicle to display an image in a stationary state to compressively deliver information.

The detection sensor 115 of the advertisement display vehicle 110 may detect whether the advertisement display vehicle 110 is in a driving state. That is, the detection sensor 115 may detect whether the advertisement display vehicle 110 is driving or the advertisement display vehicle 110 is stopped, and may provide the detection result to the display controller 113. A plurality of advertisement contents may be provided to the advertisement display vehicle 110, and the display controller 113 may control a display order or display method of the plurality of advertisement contents. When the advertisement display vehicle 110 is in a driving state, the display controller 113 may control the display device 111 to display advertisement contents corresponding to an image other than a video. Further, when the advertisement display vehicle 110 is in a stopped state, the display controller 113 may control the display device 111 to display advertisement contents corresponding to an image. That is, the advertisement display vehicle 110 according to the present embodiment can more effectively deliver advertisement contents to consumers by detecting the operating state of the vehicle and selectively providing advertisement contents according to the operating state.

In addition, the advertisement display vehicle 110 of the advertisement system 10 using the external display of the vehicle according to the present embodiment detects the state of the vehicle in real time or near real time, and transmits the abnormal state occurrence situation through various means, which allows the abnormal state of the vehicle to be quickly resolved. That is, it enables stable operation of the advertisement display vehicle 110.

The detection sensor 115 of the advertisement display vehicle 110 may further detect the vehicle state of the advertisement display vehicle 110. That is, the detection sensor 115 may further determine whether or not the advertisement display vehicle 110 is in a normal operating state. For example, the detection sensor 115 may generate abnormal operation information by checking whether the advertisement display vehicle 110 has a troubled major component, a fire, or an accident. The display controller 113 may notify the surroundings of the abnormal operation state of the advertisement display vehicle 110 through the display device 111 and the sound output unit 117 in response to the abnormal operation information. In other words, the failure state of the advertisement display vehicle 110 may be transferred to consumers located in the vicinity of the advertisement display vehicle 110 to request help from nearby consumers or to request consumers to evacuate from a dangerous situation.

In addition, the abnormal operation information may also be included in the detection information and transmitted to the advertisement providing device 100. The control unit 102 of the advertisement providing device 100 may request a service for resolving the abnormal operation state based on the abnormal operation information and the vehicle location information. For example, a rescue request for the advertisement display vehicle 110 may be requested to a 119 rescue center or a pre-affiliated vehicle service center. Further, the control unit 102 of the advertisement providing device 100 may provide the abnormal operation information to the user terminal 130 to inform the user of the fact that a problem has occurred in the advertisement display vehicle 110. That is, the advertisement display vehicle 110 according to the present embodiment transmits the fact that the abnormal state has occurred through various means, so that the abnormal state of the vehicle can be quickly resolved, and the advertisement display vehicle 110 can be driven stably..

In addition, the advertisement display vehicle 110 of the advertisement system 10 using the external display of the vehicle according to the present embodiment provides the following services to surrounding consumers through data analysis and processing, thereby increasing the advertisement effect.

When advertisement content is displayed while the advertisement display vehicle 110 is stopped, consumers located in the vicinity of the advertisement display vehicle 110 watch the displayed advertisement content. The consumers who watch the advertisement content may inquire about goods in the advertisement content (e.g., price of the goods or location of a store that sells the goods). The advertisement display vehicle 110 may further include an input unit (not shown) through which surrounding consumers may input inquiries regarding the displayed advertisement content. In this case, the input unit (not shown) may be a touch unit which a consumer can touch, but is not limited thereto. The input unit (not shown) may include a voice analysis unit capable of receiving and analyzing the voice of the consumer. The display controller 113 of the advertisement display vehicle 110 may analyze the consumer's inquiry provided through the input unit (not shown), and provide an appropriate answer to the analyzed inquiry through the display device 111 or the sound output unit 117. For example, when a consumer's inquiry (goods price and store location) is received through the input unit (not shown), the display control unit 113 may search for and collect the consumer's inquiry from the external server 120 and provide the result (goods price and store location) to the consumer through the display device 111 or the sound output unit 117. That is, the advertisement display vehicle 110 can provide additional information in response to consumers' feedback on the advertisement contents, and can not only effectively provide advertisement contents, but also induce consumers to consume advertisement goods.

Hereinafter, an advertisement method using an external display of a vehicle according to another embodiment of the present disclosure will be described.

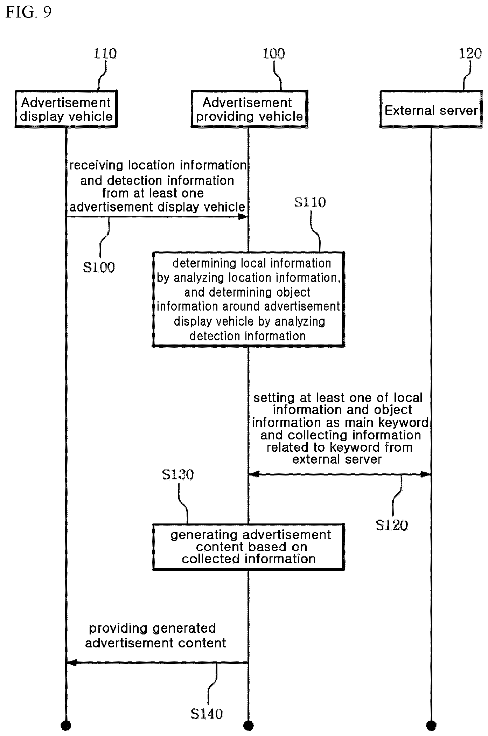

FIG. 9 is a flowchart illustrating an advertisement method using an external display of a vehicle according to another embodiment of the present disclosure. The advertisement method according to the present embodiment is a method performed by the advertisement providing device 100, and FIGS. 1 to 8 may be referred to for description. Referring to FIG. 9, the advertisement method using an external display of a vehicle according to the embodiment of the present disclosure includes: receiving location information and detection information from at least one advertisement display vehicle (S100); determining local information on a district in which the advertisement display vehicle is located by analyzing the location information, and determining object information around the advertisement display vehicle by analyzing the detection information (S 110); setting at least one of the local information and the object information as a main keyword, and collecting information related to the keyword from an external server (S120); generating advertisement content based on the collected information (S130); and providing the generated advertisement content to the advertisement display vehicle (S140).

First, location information and detection information are received from at least one advertisement display vehicle (S100).

The advertisement providing device 100 receives the location information and the detection information from the advertisement display vehicle 110.

The advertisement display vehicle 110 includes at least a display device 111 positioned at the outside of the vehicle to display advertisement content provided by the advertisement providing device; a position sensor 114 that generates location information by calculating a current position of the advertisement display vehicle; a detection sensor 115 that detects the surrounding environment of the advertisement display vehicle and generates detection information; a display controller 113 for controlling operations of the display device, the position sensor, and the detection sensor; and a transceiver 112 configured to transmit and receive data to and from the advertisement providing device 100 through a network. The advertisement display vehicle 110 may transmit the location information and the detection information to the advertisement providing device 100 through the transceiver 112, and may receive advertisement content from the advertisement providing device 100. The display controller 113 controls the overall operation of the advertisement display vehicle 110 and is configured to perform data processing necessary for the operations of the above-described components. The display controller 113 may control the overall processes of generating the location information and the detection information, transmitting the generated data, and displaying the received advertisement content through the display device 111.

Next, the location information is analyzed to determine local information on a district in which the advertisement display vehicle is located, and object information around the advertisement display vehicle is determined by analyzing the detection information (S110).

The advertisement providing device 100 may determine advertisement content suitable for the advertisement display vehicle 110 from the memory 103 based on the location information and the detection information received from the advertisement display vehicle 110, and the information collected from the external server 120. Specifically, the advertisement providing device 100 may determine the local information of the district where the advertisement display vehicle 110 is located by analyzing the location information. In this case, the local information may be determined in administrative district unit. That is, the local information may be determined in City or Province unit or in detailed administrative district unit such as Eup, Myeon, and Dong.

Also, the advertisement providing device 100 may determine object information around the advertisement display vehicle 110 by analyzing the detection information. In this case, the object information may include information related to a building located in the vicinity of the advertisement display vehicle 110, for example, a mart, a shopping mall, a movie theater, a department store, a performance hall, and the like, and the control unit 102 may include a deep learning-based first image analysis model for determining the type of a building existing in the video data.

In addition, the object information may be information related to a person located in the vicinity of the advertisement display vehicle 110. That is, the advertisement providing device 100 may further include a deep learning-based second image analysis model for analyzing a person included in the video data of the detection information. The second image analysis model may determine at least whether a person exists in the video data and the number of persons. Further, the second image analysis model may analyze the age of the person in the video data and determine the gender of the person. Moreover, the second image analysis model may determine the contact or not-contact state of the persons, and may estimate the relationship between a plurality of persons in consideration of the ages, genders, and contact or non-contact state of the persons. For example, when a couple of male and female in similar age group hold hands in the video data, the second image analysis model may estimate the relationship between these persons as a couple relationship. The advertisement providing device 100 may generate object information including information about buildings and people located in the vicinity of the advertisement display vehicle 110 through the above-described first and second image analysis models.

Next, at least one of the local information and the object information is set as a main keyword, and information related to the keyword is collected from the external server(S120).

The advertisement providing device 100 may collect, by using at least one of the generated local information and object information of the advertisement display vehicle as a main keyword, information related to the keyword from the external server 120. The external server 120 may be a web server such as Naver, Daum, Google, etc. that can collect big data such as consumer interests and shopping-related information, but is not limited thereto, and may be a meteorological agency server capable of collecting big data such as climate information and weather information for each district. In this case, the collected information may be at least one of text information, image information, and video information related to the keyword. The advertisement providing device 100 may set a district as a keyword, and may search for the keyword in the external server 120, and scrape the search result. For example, text, image, or video information about local weather, local issues, local events, local events, and products related to the district may be collected.

Advertisement content may be generated based on the collected information (S130), and the determined advertisement content may be provided to the advertisement display vehicle 110 through a network (S40).

The advertisement providing device 100 may determine advertisement content suitable for the advertisement display vehicle 110 by analyzing the data collected from the advertisement display vehicle 110 and the external server 120 through an artificial intelligence algorithm. The advertisement providing device 100 may provide the determined advertisement content to the advertisement display vehicle 110 through the network.

The control unit 102 may determine advertisement content continuity based on information collected from the external server 120. In this case, the advertisement content continuity refers to a design diagram constituting a basic skeleton of a scene composition when producing advertisement contents, and may mean basic matters required for advertisement contents production. The control unit 102 may search the memory 103 for advertisement content corresponding to the determined advertisement content continuity. When the advertisement content corresponding to the determined advertisement content continuity is stored in the memory 103, the control unit 102 may determine to read the advertisement content and transmit it to the advertisement display vehicle 110. When no advertisement content corresponding to the determined advertisement content continuity is stored in the memory 103, the control unit 102 may create and generate advertisement content corresponding to the determined advertisement content continuity. The control unit 102 may generate advertisement content by using the information collected from the external server 120 and a template corresponding to the determined advertisement content continuity. The control unit 102 may generate advertisement content corresponding to the advertisement content continuity by using at least one of the collected information, the template video, the template image, and the template sound.

As described above, the advertisement providing device 100 can determine advertisements content suitable for the advertisement display vehicle 110 to provide the advertisement contents to the advertisement display vehicle 110 by analyzing the data collected from the advertisement display vehicle 110 and the external server 120 through the artificial intelligence algorithm. Accordingly, the advertisement display vehicle 110 can provide consumers with customized advertisement contents suitable for the surrounding environment and corresponding to the needs of the consumers, which further increases the advertisement delivery effect using the outside of the vehicle.

The operations of the advertisement method using the external display of the vehicle according to the embodiments described above may be implemented at least partially as a computer program and recorded in a computer-readable recording medium.

The computer may be a computing device such as a personal computer, a desktop computer, a laptop computer, a notebook, a smartphone, or the like, or may be any integrated device thereof. The computer is a device having one or more data processing units, memories, storages, and networking components (wireless or wired) which are of special-purpose and can be replaced. The computer may execute, for example, an operating system compatible with Microsoft's Windows, or an operating system such as Apple OS X or iOS, a Linux distribution, or Google's Android OS.

The computer program includes a set of instructions that can be executed by the computer described above, and the name of the computer program may be different depending on the type of the computer. For example, when the type of the computer is a smartphone, the computer program may be referred to as App.

The computer-readable recording medium, in which a program for implementing the operations of the advertisement method using the external display of the vehicle according to the embodiments is recorded, includes all types of recording devices in which computer-readable data are stored. Examples of the computer-readable recording medium include ROM, RAM, CD-ROM, a magnetic tape, a floppy disk, an optical data storage device, and the like. In addition, the computer-readable recording medium may be distributed in network-connected computer systems, and computer-readable codes may be stored in the computer-readable recording medium and executed in a distributed manner. In addition, functional programs, codes, and code fragments for implementing the present embodiment may be easily understood by those skilled in the art to which the present embodiment belongs.

Although the present disclosure has been described with reference to the embodiments, the present disclosure should not be construed as being limited by the embodiments or drawings, and it will be understood by those skilled in the art that various modifications and changes of the present disclosure may be made without departing from the spirit and scope of the present disclosure described in the claims below.

## Claims

1. An advertisement providing device which collects data from at least one advertisement display vehicle and an external server, and determines advertisement content to be provided to the advertisement display vehicle by analyzing the collected data, the advertisement providing device comprising:
a transceiver configured to transmit and receive data to and from the advertisement display vehicle and the external server through a network;
a memory including a plurality of pre-produced advertisement contents or a plurality of templates for production of advertisement contents; and
a control unit configured to determine advertisement content to be provided to the advertisement display vehicle based on location information and detection information received from the advertisement display vehicle, and information collected from the external server.

2. The advertisement providing device of claim 1, wherein the control unit is configured to determine local information on a district in which the advertisement display vehicle is located by analyzing the location information, to determine object information around the advertisement display vehicle by analyzing the detection information, and to set at least one of the local information and the object information as a main keyword and collect information related to the keyword from the external server, and to determine advertisement content continuity based on the collected information.

3. The advertisement providing device of claim 2, wherein the control unit configured to search the memory for advertisement content corresponding to the determined advertisement content continuity, to read, when the advertisement content corresponding to the determined advertisement content continuity is stored in the memory, the corresponding advertisement content from the memory, and to read, when no advertisement content corresponding to the determined advertisement content continuity is stored in the memory, a template corresponding to the determined advertisement content continuity from the memory and create advertisement content using the collected information and the template corresponding to the determined advertisement content continuity.

4. The advertisement providing device of claim 2, wherein the detection information includes video data captured around the advertisement display vehicle, and the control unit includes a deep learning-based first image analysis model that determines a type of a building existing in the video data and a deep learning-based second image analysis model that performs analysis on a person included in the video data, and wherein the control unit generates the object information through the first image analysis model and the second image analysis model, and the second image analysis model determines the presence or absence of a person and the number of persons in the video data, determines an age of each person included in the video data, a gender of each person, and contact or non-contact between the persons, and generates the object information by estimating a relationship between a plurality of persons in consideration of the ages, the genders and the contact or non-contact.

5. An advertisement system using an external display of a vehicle, the advertisement system comprising:
at least one advertisement display vehicle;
an advertisement providing device that collects data from the advertisement display vehicle and an external server, and determines advertisement content to be provided to the advertisement display vehicle by analyzing the collected data; and
a user terminal for controlling at least one of the advertisement providing device and the advertisement displaying vehicle,
wherein the advertisement providing device includes:
a transceiver configured to transmit and receive data to and from the advertisement display vehicle and the external server through a network;
a memory including a plurality of pre-produced advertisement contents or a plurality of templates for production of advertisement contents; and
a control unit configured to determine advertisement content to be provided to the advertisement display vehicle based on location information and detection information received from the advertisement display vehicle, and information collected from the external server, and
wherein the advertisement display vehicle includes:
a display device positioned at an outside of the vehicle to display advertisement content provided by the advertisement providing device;
a position sensor that generates location information by calculating a current position of the advertisement display vehicle;
a detection sensor that detects a surrounding environment of the advertisement display vehicle and generates detection information; and
a display controller configured to control operations of the display device, the position sensor, and the detection sensor.

6. The advertisement system of claim 5, wherein the detection sensor detects a state of the display device and further generates detection information on the state of the display device, and the control unit of the advertisement providing device manages the state of the display device based on the detection information on the state of the display device, and provides the status of the display device to the user terminal.

7. The advertisement system of claim 5, wherein the detection sensor of the advertisement display vehicle further detects whether or not the advertisement display vehicle is being driven, and the display controller controls the display device to display advertisement content corresponding to an image when the advertisement display vehicle is in a driving state, and controls the display device to display advertisement content corresponding to a video when the advertisement display vehicle is in a stopped state.

8. The advertisement system of claim 5, wherein the detection sensor of the advertisement display vehicle further detects an abnormal operation state of the advertisement display vehicle and generates detection information, and the display controller notifies surroundings of the abnormal operation state of the advertisement display vehicle through the display device in response to the abnormal operation state, and the control unit of the advertisement providing device requests a service for resolving the abnormal operation state of the advertisement display vehicle to a previously affiliated vehicle service center in response to the detection information including the abnormal operation state, and provides the occurrence of the abnormal operation state to the user terminal.

9. An advertisement method using an external display of a vehicle, the advertisement method comprising:
receiving location information and detection information from at least one advertisement display vehicle through an advertisement providing device;
determining local information on a district in which the advertisement display vehicle is located by analyzing the location information, and determining object information around the advertisement display vehicle by analyzing the detection information, through the advertisement providing device;
setting at least one of the local information and the object information as a main keyword, and collecting information related to the keyword from an external server, through the advertisement providing device;
determining advertisement content based on the collected information through the advertisement providing device; and
providing the determined advertisement content to the advertisement display vehicle through the advertisement providing device.

10. A computer program stored in a medium to execute the advertisement method of claim 9 in combination with hardware.
